# EUROPEAN PATENT SPECIFICATION

(11) **EP 3 961 207 B1**
(45) Date of publication and mention of the grant of the patent: **23.10.2024**
(21) Application number: 20192643.3
(22) Date of filing: 25.08.2020
(51) Int. Cl.: G01N 30/00

(54) **METHOD OF FRACTIONATING A HETEROGENEOUS SAMPLE AND APPARATUS FOR SUCH A METHOD**
VERFAHREN ZUR FRAKTIONIERUNG EINER HETEROGENEN PROBE UND VORRICHTUNG FÜR EIN SOLCHES VERFAHREN
PROCÉDÉ DE FRACTIONNEMENT D'UN ÉCHANTILLON HÉTÉROGÈNE ET APPAREIL POUR UN TEL PROCÉDÉ

(43) Date of publication of application: 02.03.2022
(73) Proprietor: Postnova Analytics GmbH, 86899 Landsberg (DE)
(72) Inventor: Riekkola, Marja-Liisa, 00014 Helsingin yliopisto (FI); Multia, Evgen, 00014 Helsingin yliopisto (FI); Liangsupree, Thanaporn, 00014 Helsingin yliopisto (FI); Jussila, Matti, 00014 Helsingin yliopisto (FI)
(74) Representative: Hoffmann Eitle

(56) References cited:
- WO-A1-97/47390
- WO-A2-02/055654
- US-A1- 2019 310 172
- MULTIA EVGEN ET AL: "Fast isolation of highly specific population of platelet-derived extracellular vesicles from blood plasma by affinity monolithic column, immobilized with anti-human CD61 antibody", ANALYTICA CHIMICA ACTA, ELSEVIER, AMSTERDAM, NL, vol. 1091, 11 September 2019 (2019-09-11), pages 160 - 168, XP085886163, ISSN: 0003-2670, [retrieved on 20190911], DOI: 10.1016/J.ACA.2019.09.022

## Description

### Technical Field

The present invention relates to a method of fractionating a heterogeneous sample and an apparatus used for such a method.

### Technical Background

In a variety of different fields, such as, for example, medicine, it is desirable to separate components of a heterogeneous sample from the remainder of that sample. This applies, in particular, to human or animal biomacromolecules.

Such biomacromolecules are structurally diverse and complex. They are excellent biomarkers that are needed for the recognition and detection of the early stages of many diseases, to understand the pathogenesis of the disease, and to find appropriate treatment solutions. Their fast and reliable isolation and purification behaviour is often challenging or even a bottleneck for their applications in diagnosis and therapy due to their stability requirements, fragile and unique nature. Special attention is required especially when isolation is carried out from biofluids. New systems are needed to eliminate the problems, such as errors depending on users, the aggregation and oxidation of isolates, shear and mechanical stress, and contamination present in the current, often tedious and time consuming methods and techniques.

The study of subpopulations of lipoproteins and extracellular vesicles (EVs) has been found to be important for detection of different diseases (e.g. small dense low-density lipoprotein (LDL) particles being considered unfavourable for health), or for finding a new extracellular vesicle subpopulation called exomere, for which their effects on health are partly unknown. The general term EVs includes both ectosomal and endosomal EVs (exosomes). They are similar in their size and other biophysical characteristics, and it is thus not possible to separate them based on size or density alone. Therefore, specific immuno-based separation techniques are required for future clinical diagnostic and therapeutic applications of exosomes and other EVs. In particular the study of subpopulations of EVs has recently grabbed great attention.

It is challenging to selectively isolate nanosized biomacromolecules (e.g. lipoproteins and EVs) from human biofluids, such as plasma, in a high yield due to the complex compositions of the respective sample matrices. Immunoaffinity chromatography (IAC) with polymer-based monolithic columns has been a valuable tool for selective isolation of biomacromolecules. However, to understand the characteristics of heterogeneous subpopulations and their effects on human health, further fractionation and analysis are needed. flow field flow fractionation and particularly asymmetrical flow field flow fractionation (AF4), coupled with light scattering detectors has already proved its importance in off-line fractionation of biomacromolecules, lipoproteins, and EVs by helping to elucidate the nature of their subpopulations.

However, as pointed out in many studies, IAC by itself does not lead to a sufficiently high purity of the isolates due to that the substrates in the process still frequently retain some unwanted residues, although the already rather high selectivity of IAC, it alone is not sufficient for purifying the subpopulations EVs. Since EVs are heterogeneous mixtures of particles, it is desired to separate for example exomeres, exosomes from other EVs and matrix components. Therefore, an additional size-based separation is desirable, especially when subpopulations are studied. For lipoproteins such as LDL an IAC purification step is usually sufficient by itself, but again, size-based fractionation is beneficial, since there are different functions for small dense LDL and larger LDL for example.

On the other hand, AF4 only allows for separating components of a heterogeneous sample according to their hydrodynamic size but does not allow for separating according to any other criteria, such as for example their chemical composition or mass/density. Since quite often, the components to be separated have identical or very similar sizes; AF4 by itself is insufficient for separation.

Multia, E.; Tear, C. J. Y.; Palviainen, M.; Siljander, P.; Riekkola, M. L. Fast Isolation of Highly Specific Population of Platelet-Derived Extracellular Vesicles from Blood Plasma by Affinity Monolithic Column, Immobilized with Anti-Human CD61 Antibody. Anal. Chim. Acta 2019, 1091, 160-168. https://doi.org/10.1016/j.aca.2019.09.022, which is discussed further below, discloses features falling under the preamble of claim 1.

### Summary of the Invention

The present invention aims at solving those problems.

The invention is defined by the method according to claim 1 and by the apparatus of claim 11. Preferred embodiments are defined in the dependent claims.

According to claim 1, a method of fractionating a heterogeneous sample comprises an immunoaffinity chromatography (IAC) step. In that step, a heterogeneous sample is introduced into an immunoaffinity chromatography device, which can, for example, comprise a poly (glycidyl methacrylate) based monolithic column or an otherwise, preferably miniaturized IAC device. The introducing step typically means that the sample, which is generally a liquid, is allowed to flow into the immunoaffinity chromatography device. That device comprises a substrate that is arranged to selectively bind to a component of the heterogeneous sample so as to retain that component inside the immunoaffinity chromatography device even when the sample flows out of the IAC device. The components are thus bound to the substrate and are retained within the immunoaffinity chromatography device whilst the sample otherwise flows out of the device. The substrate choice depends on the target and shall preferably comprise monoclonal antibodies. For EVs/exosomes/exomeres preferred antibodies used for the substrates may target at the following proteins: tetraspanin proteins e.g. CD9, CD37, CD53, CD63, CD81, CD82, CD151, as well as heat shock proteins e.g. HSP10, HSP33, HSP60, HSP70, HSP110, HSP90, HSP100, HSPA5, small heat-shock proteins (sHSPs), T-complex protein 1 subunit beta protein, flotillin-1, tumour susceptibility gene 101 protein, programmed cell death 6-interacting protein (ALIX), integrins such as alpha CD49a, CD49b, CD49c, CD49d, CD49e, CD49f, CD11D, CD103, CD11a, CD11b, CD11c, CD41, CD51; ITGA7, ITGA8, ITGA9, ITGA10, ITGA11; beta CD29,CD18,CD61,CD104; ITGB5, ITGB6, ITGB7, ITGB8.

Accordingly, in that immunoaffinity chromatography step, the specific component of the heterogeneous sample, such as proteins and protein complexes, lipoproteins, EVs, exomeres, exosomes, viruses that are to be fractionated are accumulated on the substrate.

Subsequently, an elution step occurs in which an eluent flows through the immunoaffinity chromatography device. This eluent is chosen so as to selectively disrupt the bond between the bound component of the heterogeneous sample and the substrate. This elution step allows for removing the component that has been bound to the substrate. In that way, the effluent that flows out of the immunoaffinity chromatography device contains the so purified component ideally in a higher concentration than in the heterogeneous sample before. Suitable choices of the substrate and of the eluent are known to the skilled person working in the field of immunoaffinity chromatography.

In some embodiments, a pH of higher than 10, preferably around 11.3 was used during elution because it was found that such a pH was beneficial for eluting the purified component from the IAC system. It was found that there is a need to use an IAC system where the column has a sufficiently high stability to correspondingly. high pH-values. Silica-based monolithic columns were not used because of their reduced stability under these high pH conditions. In contrast, poly (glycidyl methacrylate) based monolithic columns were found to be usable. Due to the very fast elution process, the decomposition of the purified components could be avoided despite the very high applied pH that is known to usually have detrimental effects on the stability of bio(macro-)molecules.

Subsequently, AF4 is performed on the effluent flowing out of the immunoaffinity chromatography device that comprises the component that has been dissolved therein. In this AF4 step, the component can be further purified. Compared with prior art methods, this allows for purifying the component based on both its immunobinding properties and on its size, which in turn, leads to a highly specific and highly efficient way of fractionating and purifying a component from a heterogeneous sample. Accordingly, in such an in-line configuration of, first, an immunoaffinity chromatography step and subsequently a flow field flow fractionation step such as e.g. AF4, the resulting purity is much higher.

In a preferred embodiment, there is a rinsing step of flowing a cleaning fluid through the immunoaffinity chromatography device. This step occurs between the immunoaffinity chromatography step and the elution step and serves to remove any unwanted residue left in the immunoaffinity chromatography device. A corresponding method leads to a higher purity of what is left in the immunoaffinity chromatography device. This improves the purity of the component that is to be fractionated. The cleaning fluid is chosen to not affect negatively the bound component or its bond to the substrate.

In a preferred embodiment, the field flow fractionation step comprises an asymmetrical flow field flow fractionation (AF4) step. Such a field flow fractionation step has been proven to be particularly efficient when it comes to fractionating EVs.

Alternatively, or additionally, the field flow fractionation step may also comprise other flow field flow fractionation subtechniques such as e.g. frit-inlet AF4 (FI-AF4) or electrical AF4 (EAF4), but also centrifugal field flow fractionation (CF3) or thermal field flow fractionation (TF3). Due to the at times higher and/or additional separation forces that can be applied in such a field flow fractionation step, a highly selective field flow fractionation can be achieved.

It is preferred that the fractionated liquid that is output from the field flow fractionation step is delivered to a storage container where it can be retained for future use. Such a future use could be analysis or some other way of using the fractionated liquid. This allows for using the thus purified components subsequently.

It is preferred that the fractionated liquid that is output from the field flow fractionation step is analysed using one or more of an UV detector, a multi-angle light scattering detector, a diode array detector, and a dynamic light scattering detector. Using such detectors, the properties of interest of the component can be easily determined.

It is preferred that the heterogeneous sample is human or animal blood, urine, or blood components, preferably human or animal blood plasma or serum. If the method is used in that way, it becomes possible to use it in a human or veterinary medicine application. In particular, this application allows for a subsequent diagnosis of human or animal medical conditions based on at least in parts the purified components and therapeutic purposes where purified components can be used for drug delivery, cellular reprogramming, and immunotherapy.

In a preferred embodiment, the substrate of the immunoaffinity chromatography device is arranged to selectively bind two or more components of the heterogeneous sample. The eluent is arranged to disrupt the bond of only some of the bound components. Accordingly, with the same immunoaffinity chromatography device, one can, in the immunoaffinity chromatography step, selectively bind several of the components, and in the subsequent elution step, only dissolve one of these components. The respective other components that remain bound to the immunoaffinity chromatography devices substrate can be eluted in subsequent steps and can, in such subsequent steps, be fractionated using the previously described field flow fractionation methods. In that way, one can fractionate several components of the blood with the same experimental setup.

In a preferred embodiment of the present invention, an apparatus is provided that is arranged for carrying out the method according to one of the preceding claims. Such an apparatus will typically include a sample vessel, a pump for pumping the sample out of the sample parcel, an immunoaffinity chromatography device and a field flow fractionation device as well as a device for introducing an eluent into the immunoaffinity chromatography device.

### Brief Description of the Drawings

Figure 1 shows, schematically, an apparatus arranged for carrying out the inventive method.
Figures 2 to 4 show experimental results obtained using an embodiment of the invention.
Figures 5 and 6 show cycle times used for an embodiment of the invention.
Figures 7-10 show experimental results obtained using an embodiment of the invention.

### Detailed Description of the Drawings

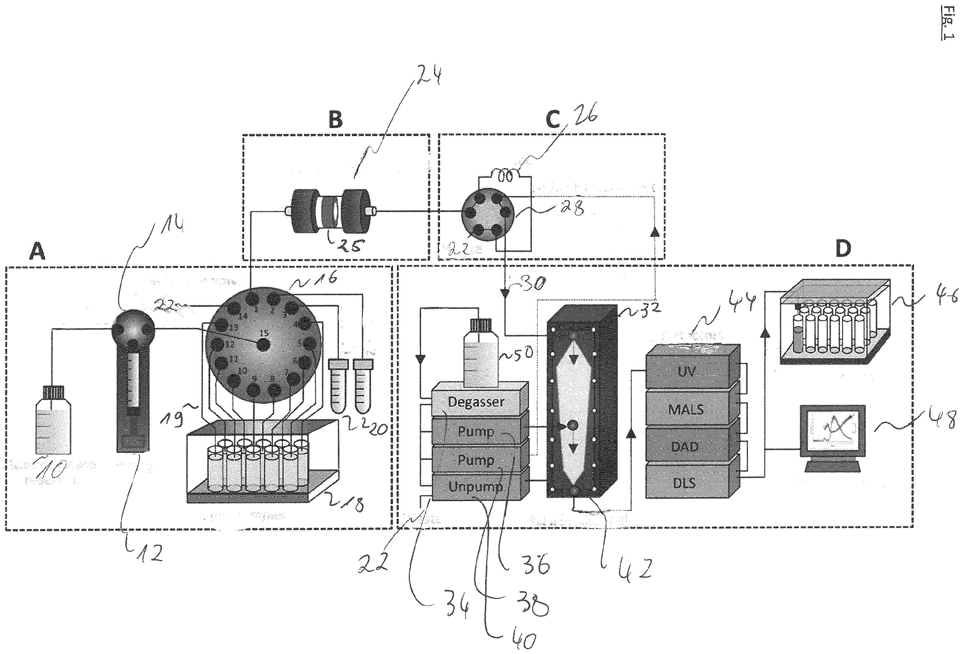

Figure 1 shows a configuration arranged for carrying out the invention.

The arrangement shown in Figure 1 comprises an automated in-line system for the isolation of nanosized biomacromolecules. It includes a selection valve in order to control the isolation process (A), a monolithic column to perform IAC (B), an automated six port valve to transfer the sample to an asymmetrical flow field flow fractionation (AF4) device (C), which is coupled with UV, MALS, DAD, and DLS detectors and a fraction collector 46 (D).

Samples to be fractionated are held in auto sampler 18. Those samples are connected via lines 19 to a selection valve 16. The selection valve 16 is connected to a three-port valve 14 that is, in turn connected, to a pump 12 and a mobile phase reservoir 10. It is also connected to two eluent containers 20. Further provided is a waste outlet 22 which can be used for disposing of a liquid that is no longer needed.

Using the pump 12, a sample contained within the auto sampler 18 can be pumped, using the lines 19, to a monolithic column 24 with an immunoaffinity ligand bound to a substrate 25 provided within the column 24. The substrate 25 is arranged so that a component to be fractionated that is contained within one or more of the samples held in the auto sampler 18 binds thereto.

Connected to this monolithic column 24 is a six-port valve 28 having a sample loop 26 and another connection to a waste outlet 22. This six-port valve 28 can ensure that a liquid that is flowing out of the monolithic column 24 is either directed to the waste reservoir 22, or using the conduit 30, to a field flow fractionation device 32.

In this field flow fractionation device 32, which in the present context is an AF4 device, an AF4 channel 42 is provided in which an asymmetric flow is arranged using two pumps 36, 38, an unpump 40, degasser 34, and mobile phase reservoir 50. Due to asymmetric flow that is generated by those components, the sample fluid that leaves through conduit 30 is fractionated. The output of the AF4 channel 42 is introduced into the detector array 44 and is then stored in the fraction collector 46. The output of the detectors 44 is analysed using a data acquisition device 48. The waste liquid generated asymmetric flow generation configuration is led to waste deposit 22.

In use, a sample is first led through the column 24 from one of the samples held in the auto sampler 18. Once the whole sample has been led through that auto sampler, it will be led, using the three-way valve 28, to the waste deposit 22. Subsequently, the sample is rinsed using, for example, a liquid from the mobile phase reservoir 10 that is again led to the waste deposits 22. Once the monolithic column 24 has thus been cleaned, an eluent is led from one of the eluent containers 20 through the monolithic column 24 whilst the six-port valve 28 is set so that the output of the monolithic column 24 is led to the field flow fractionation device 22 where an asymmetric flow is generated. Using that asymmetric flow, the sample is fractionated, and the output of the field flow fractionation device 32 is first led to the detectors 44 and then to the fraction collector 46 where the thus purified sample is stored.

In the following, we will describe in more detail the set up used in a prototype configuration:

### Chemicals and Reagents

Phosphate buffered saline (PBS) tablets, ethanolamine, and acetonitrile (gradient grade, purity ≥99.9%) were obtained from Sigma-Aldrich (St. Louis, USA). Ammonia (25%) was purchased from Riedel-de Haën (Seelze, Germany). NaHCO₃ and Na₂CO₃ anhydrous were bought from Merck KGaA (Darmstadt, Germany). NaOH (1 M) and formic acid (99-100%) were from VWR Chemicals (Fontenay-sous-Bois, France). Glycine-2,2-d2 (Gly-d2) (98 atom % D), L-Phenylalanine-3,3-d2 (Phe- d2) (98 atom % D), and L-Lysine-4,4,5,5-d4 (Lys- d4) (98 atom % D, 98% (CP)) were provided by Sigma Aldrich (St. Louis, USA) and used as internal standards (ISTDs). D-Fructose-13C6 was from Carbosynth Ltd (Berkshire, UK) and was also used as ISTD. Methanol (LC-MS Chromasolv^{™}, ≥ 99.9%) was from Honeywell (Honeywell Riedel-de Haën, Germany). Amino acid standards, L-Alanine (Ala), γ-Aminobutyric acid (GABA), L-Arginine (Arg), L-Aspartic acid (Asp), L-Citrulline (Cit), L-Cysteine (Cys) HCl, L-Glutamic acid (Glu), L-Glutamine (Gln), Glycine (Gly), LHistidine (His) HCl, L-Isoleucine (Ile), L-Leucine (Leu), L-Lysine (Lys) HCl, L-Methionine (Met), L-Phenylalanine (Phe), L-Proline (Pro), L-Threonine (Thr), L-Tryptophan (Trp), L-Valine (Val), and L-Ornithine (Orn) HCl, were provided by Seikagaku Kogyo Co., Ltd (Tokyo, Japan). L-Serine (ca. 99%) was bought from Ega-Chemie (Steinheim, Germany), L-Asparagine (Asn), and D(-)-Fructose was bought from Merck KGaA (Darmstadt, Germany). D-(+)-Glucose (purity ≥99.9%) was from Sigma-Aldrich (St. Louis, USA). MilliQ water was sourced from MilliQ system (Millipore, USA). CD9 Monoclonal Antibody (eBioSN4 (SN4 C3-3A2)), eBioscience^{™} was from Thermo Fisher Scientific (USA), and Purified Mouse Anti-Human CD61 (clone VI-PL2) antibody was provided by BD Biosciences (USA). Anti-apoB-100 monoclonal antibody (code Anti-h ApoB 2101 SPTN-5) was kindly donated by Medix Biochemica Co. Inc (Helsinki, Finland). Human blood plasma was provided by the Finnish Red Cross Blood Service (Helsinki, Finland) with permission (Permission no. 37/2015).

### Instruments

CIM^{®} carbonyldiimidazole (CDI) disks (0.34 mL, pore size 1.3 um) and housing cartridges were obtained from BIA Separations (Ljubljana, Slovenia). The AF4 system (Postnova Analytics, AF2000 MF system, Landsberg, Germany) consisted of a 350 um spacer (Postnova Analytics) and a 10 kDa cut off regenerated cellulose membrane (Postnova Analytics). The AF4 channel (Postnova Analytics) was coupled with a UV detector (PN3211, Postnova Analytics, Landsberg, Germany), a multi-angle light scattering (PN3070 MALS, Postnova Analytics GmbH, Landsberg, Germany), a diode array (DAD) (), and a dynamic light scattering (DLS) (Zetasizer Nano, Malvern Instruments, UK) detectors. Fractions were collected using a fraction collector (PN8030, Postnova Analytics GmbH, Landsberg, Germany). Nanosep^{®} centrifugal devices for pre-concentration of fractions with a 10K molecular weight cut-off membrane filters were from Pall Corporation (New York, USA). Supor^{®}-200 membrane filters (0.2 um) were from PALL Life Sciences (USA), and MILLEX^{®} Low Protein Binding Hydrophilic LCR (PTFE) membrane filters (0.45 um) were bought from Millipore (USA).

Zeta potential measurements were performed with Zetasizer Nano ZS (Malvern Instruments, UK). An Agilent 1260 Infinity HPLC system equipped with a SeQuant^{®} ZIC^{®}-cHILIC column (150 mm x 2.1 mm i.d., pore size 100 Å, 3 um particle size) from Merck KGaA (Germany) coupled with an Agilent 6420 triple quadrupole mass spectrometer equipped with an electrospray ion source, was carried out for the individual isolation and quantitation of amino acids and sugars. The column was connected to an ultra HPLC in-line filter (2.0 um KrudKatcher, Phenomenex, Torrance, CA, USA part number AF0-8497) and a SeQuant^{®} ZIC^{®}-cHILIC guard column (20 mm x 2.1 mm i.d., 200 Å particle size, particle size 5 um, Merck KGaA, Germany). Scanning electron microscopy (SEM) images were obtained with a Hitachi S-4800 field emission SEM (FESEM) (Hitachi, Japan).

### Preparation of Solutions

Phosphate buffered saline (PBS) solution was obtained by dissolving a PBS tablet in 200 mL of MilliQ (MQ) water and filtered through a 0.2 um membrane filter (Supor^{®}-200). Carbonate-bicarbonate solution (0.1 M, pH 11.3) was made by mixing Na₂CO₃ solution (90 mL of 0.1 M) with NaHCO3 solution (10 mL, 0.1 M). The solution was pH-adjusted to 11.3 with 1 M NaOH. NH4OH (0.15 M, pH 11.5) was obtained by diluting 1.13 mL of 25% ammonia solution to the final volume of 50 mL with MQ water. The HILIC-MS/MS mobile phase A was made by adding 1 mL of formic acid to acetonitrile (999 mL), and the mobile phase B was obtained by adding 1 mL of formic acid to MQ water (999 mL). All standards and internal standards were prepared in mobile phase B.

### On-line IAC - AF4 System

On-line IAC - AF4 system is seen in Figure 1. In addition to monolithic disk column and AF4, the system included: 1) an in-house-built pump with a 5 ml glass syringe driven by stepping motor and a three port valve with an electrical actuator for dispensing the solutions, 2) Cheminert C25Z-31814D (Vici AG, Schenkon, Switzerland) 14 position stream selection valve connected to EMHMA-CE microelectric valve actuator (Vici AG, Schenkon, Switzerland) for selection of samples and eluents, iii) a six port medium pressure injection valve V-451 (IDEX Upchurch Scientific, Oak Harbor, WA, USA) connected to Model E60 actuator (Vici AG, Schenkon, Switzerland) for the introduction of the sample to AF4. The setup was controlled by a Raspberry Pi (Model B Rev. 2.0) single board computer on which in-house-written Python scripts were run on the Raspbian (ver.joo ot 9 Stretch) operating system. Selection valve was employed for controlling the isolation process (Figure 1A), which included 5 mL syringe pump and an autosampler for 10 samples. Process automation and control of isolation process were run with customized software. A three port valve connected the mobile phase reservoir to the syringe pump. The core of the IAC based isolation system consisted of a monolithic column with immobilized immunoaffinity ligand (Figure 1B). Appropriate elution conditions to release the isolates from the column, immobilized with antibodies, had been optimized in previous studies (Multia, E.; Tear, C. J. Y.; Palviainen, M.; Siljander, P.; Riekkola, M. L. Fast Isolation of Highly Specific Population of Platelet-Derived Extracellular Vesicles from Blood Plasma by Affinity Monolithic Column, Immobilized with Anti-Human CD61 Antibody. Anal. Chim. Acta 2019, 1091, 160-168. https://doi.org/10.1016/j.aca.2019.09.022, and Liangsupree, T.; Multia, E.; Metso, J.; Jauhiainen, M.; Forssén, P.; Fornstedt, T.; Öörni, K.; Podgornik, A.; Riekkola, M. L. Rapid Affinity Chromatographic Isolation Method for LDL in Human Plasma by Immobilized Chondroitin-6-Sulfate and Anti-ApoB-100 Antibody Monolithic Disks in Tandem. Sci. Rep. 2019, 9 (1), 11235. https://doi.org/10.1038/s41598-019-47750-z). With an automated six port valve a monolithic column was connected on-line to AF4 (Figure 1C). The injection steps were controlled by a timer in the software that turned the valve and started the AF4 run after the biomacromolecules entered into the sample loop, leading to a minimized length of stay under high pH conditions. AF4, used for characterization provided further information on the size distribution and concentration of different subpopulations of the biomacromolecules with DAD, DLS, and UV detectors, resulted in a gentle fractionation of the isolates (Figure 1D). The fractions, collected with fraction collector in a physiological buffer (PBS), were then available for further analysis and characterization.

### Scanning Electron Microscopy (SEM)

Pre-concentrated combined fractions of subpopulations of EVs were dried on clean polished silicon wafer surfaces. The samples were coated with 3 nm of Au-Pd alloy using a Cressington 208HR high resolution sputter coater. Imaging was performed at 3 kV with secondary electrons.

### Hydrophilic Interaction Liquid Chromatography - Tandem Mass Spectrometry (HILIC-MS/MS)

### Amino acids and glucose extraction

CD9- and CD61- positive (CD9+ and CD61+) EV fractions were subjected to salt removal and pre-concentration with disposable Nanosep^{®} centrifugal devices with 10K molecular weight cut off membrane filters at 14000 x g for 2 min for each 500-mL fraction at room temperature. The filtrate then was discarded. Thereafter, 50 µL of cold acetonitrile was added to the membrane for removal of precipitated proteins and EV lysis. Cold acetonitrile led to an effective precipitation of proteins from human plasma and lysed the lipid bilayer membranes of the EVs. After, the filter was centrifuged for another 2 min at 14000 x g. Then the filtrate was collected, and the ISTD mixture which gave the final concentration of 1 ppm of amino acids (Glycine-2,2-d2, L-Phenylalanine-3,3-d2, and L-Lysine-4,4,5,5-d4) and 5 ppm of D-Fructose-13C6 in MQ water containing 0.1% formic acid was added to the filtrate for HILIC-MS/MS analysis.

### Determination of amino acids and glucose by HILICMS/MS

The method used for the determination of amino acids and glucose was based on a previously developed method (Helin, A.; Sietiö, O.-M.; Heinonsalo, J.; Bäck, J.; Riekkola, M.-L.; Parshintsev, J. Characterization of Free Amino Acids, Bacteria and Fungi in Size-Segregated Atmospheric Aerosols in Boreal Forest: Seasonal Patterns, Abundances and Size Distributions. Atmos. Chem. Phys 2017, 17, 13089-13101. https://doi.org/10.5194/acp-17-13089-2017) with some modifications. The column temperature was adjusted to be 50°C. The mobile phase A formed of acetonitrile with 0.1% formic acid, and the mobile phase B of MQ water with 0.1% formic acid. The separation of the target analytes was conducted using following gradient program: 20% B for 15 min (0.4 mL/min), 20-80% B for 5 min (0.3 mL/min), followed by 80-20% B for 3 min (0.3 mL/min). The injection volume, selected for all the samples, was 3 µL. The effluent was electrosprayed, ionized (positive and negative mode for amino acids and sugars, respectively), and monitored using MS2 detection in multiple reaction monitoring mode (MRM), with the exception of glucose, which was analysed in single ion monitoring mode. Ionization conditions and MRM parameters for the different compounds are summarised in Table 1.

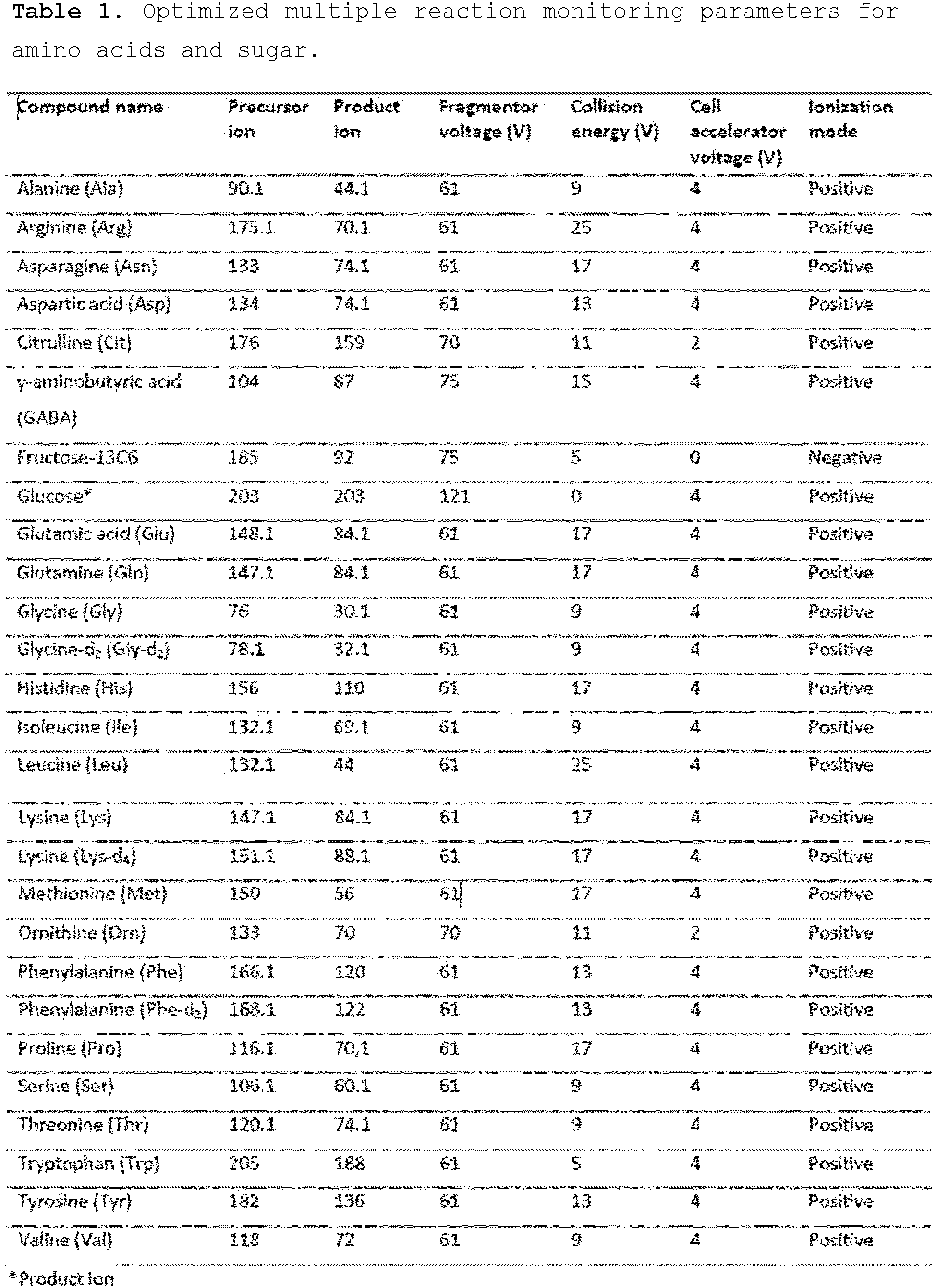

Total cholesterol (Free and esterified) concentrations were obtained from the samples using Roche Cholesterol CHOD-PAP reagent (Kit no. 1489232; Roche, Germany) according to the manufacturer's protocol. The absorbance was measured with an EnSpire^{®} Multimode Plate Reader (PerkinElmer Inc., USA) at 510 nm. Total protein concentrations (concentration range: 0.1-1.0 mg/mL) were obtained using Bio-Rad DC^{™} Protein Assay kit (Bio-Rad Laboratories, Hercules, CA) based on Lowry method20 at 750 nm and PierceTM BCA Protein Assay Kit (Item no. 23225; Thermofisher Scientific) (for concentrations lower than 0.1 mg/mL) based on bicinchoninic assay (BCA) at 550 nm according to the manufacturer's protocols. Calibration curves and sample concentrations were determined using EnSpire multilabel analyzer version 4.13.3005.1482.

### Statistical Analysis

Different R 3.6.3 statistical analysis tools were applied in this research. Skewness and Kurtosis tests, for data distribution evaluation; Principal Component Analysis (PCA), for visualization of the differences between CD9+ and CD61+ EV subpopulations; and Linear Discriminant Analysis (LDA), for statistical confirmation of the differences, including the elucidation of the process variables. Additional studies were also performed to evaluate the potential differences between EV subpopulations (PCA and LDA). In all of the cases, the concentrations of the free amino acids present in the EVs normalized by the total amount of protein were used as input variables to develop the statistical models. Additional root square transformation was done to give normal data distribution of the input variables.

Three separate monolithic disk columns for the IAC were immobilized with anti-apoB-100, anti-CD9, and anti-CD61 according to the protocols that were previously described in the literature. IAC process cycles (Figure 1) for the isolation of apoB-100 containing lipoproteins, CD9+, and CD61+ EVs are summarized in Table 2. The repetition information of the experiments is given in Figure 1 and the regeneration and waiting periods were taken into account for the AF4 to allow the next reliable fractionation. The total time for apoB-100 lipoprotein isolation and regeneration of the disk column was 16.5 min, including 1 mL sample injection, washing with 3 mL PBS, elution with 2 mL of NH4OH, and again washing with 3 mL PBS. Altogether, 51 min was needed for the isolation and regeneration of the EV-disks. The EV isolations had a larger sample volume (5 mL) and an additional NH₄OH regeneration step (Eluent 1, Figure 1A). Further, a carbonate-bicarbonate solution (Eluent 2, Figure 1A) was used to elute the EVs. In previous studies, it was found that the carbonate-bicarbonate solution (pH 11.3) was capable of eluting LDL particles with higher specificity compared to NH₄OH (pH 11.3) and with minimal protein contaminants. Therefore, in the studies leading to the present invention, the carbonate-bicarbonate solution was also used for selective elution of EVs, while NH₄OH was used for the elution of all apoB-100-containing lipoproteins from the anti-apoB-100 disk. The flow rate for the isolation and elution of apoB-100 containing lipoproteins was set to 0.5 mL/min, while it was set to 0.25 mL/min for the isolation of EVs.

The regeneration step was used for EV disks before the next sample with 2 mL of NH₄OH and 3 mL PBS at a flow rate of 1 mL/min. ApoB-100 disk needed no additional regeneration step, since NH₄OH was already suitable for elution. The AF4 run was automatically launched after filling the sample loop (500 uL) with the eluent of the IAC in the six port valve. The injection flow of 0.1 mL/min was applied over 5 min during the focusing step at a cross flow rate of 3 mL/min. PBS was used as the AF4 eluent with a detector flow rate of 0.5 mL/min. A transition time of 1 min was applied immediately after the focusing step. Biomacromolecules were subjected to a high pH for only a few minutes before the eluate buffer was substituted by PBS.

Separation and fractionation of apoB-100 containing lipoproteins with AF4 was achieved with a 2 min linear decrease of the cross flow to 0.5 mL/min, and was followed by a linear decrease over 1 min to 0 mL/min. After the cross flow reached 0 mL/min, only the detector flow was applied for 15 min. The total time of the run was 24 min with fraction collection taking extra 2 min.

Separation and fractionation of CD9+ and CD61+ EVs (including their subpopulations in the size range of exosomes and exomeres) with AF4 was performed with 5 min linear decrease in cross flow to 1.0 mL/min after the focusing step. This was followed by a linear decrease over 15 min to 0 mL/min. After the cross flow reached 0 mL/min, only the detector flow was applied for 14 min resulting in a total run time of 40 min with extra 2 min for the fraction collection. The optimal AF4 conditions are summarized in Table 3.

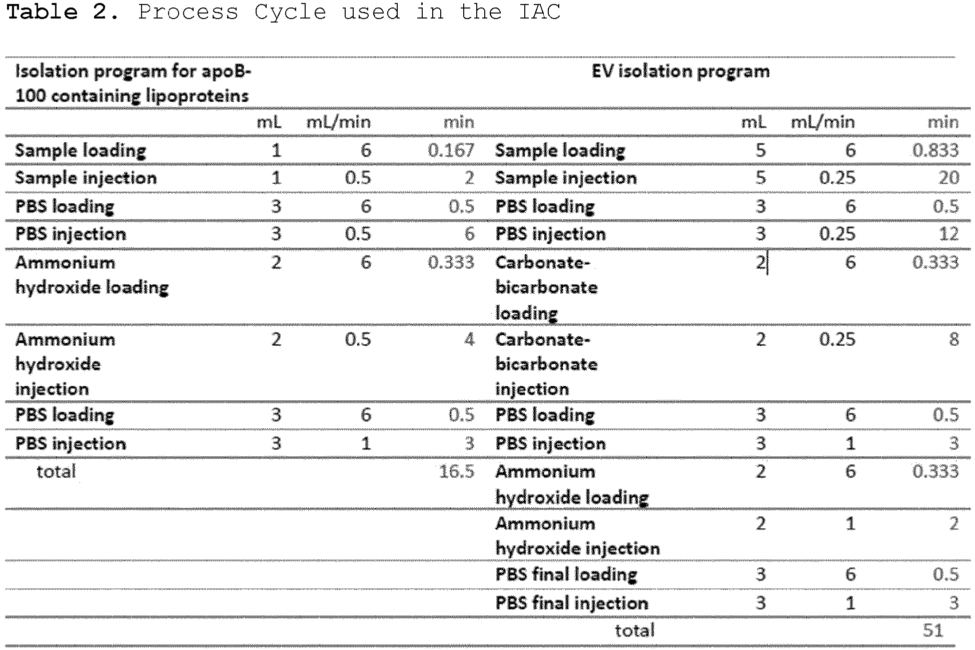

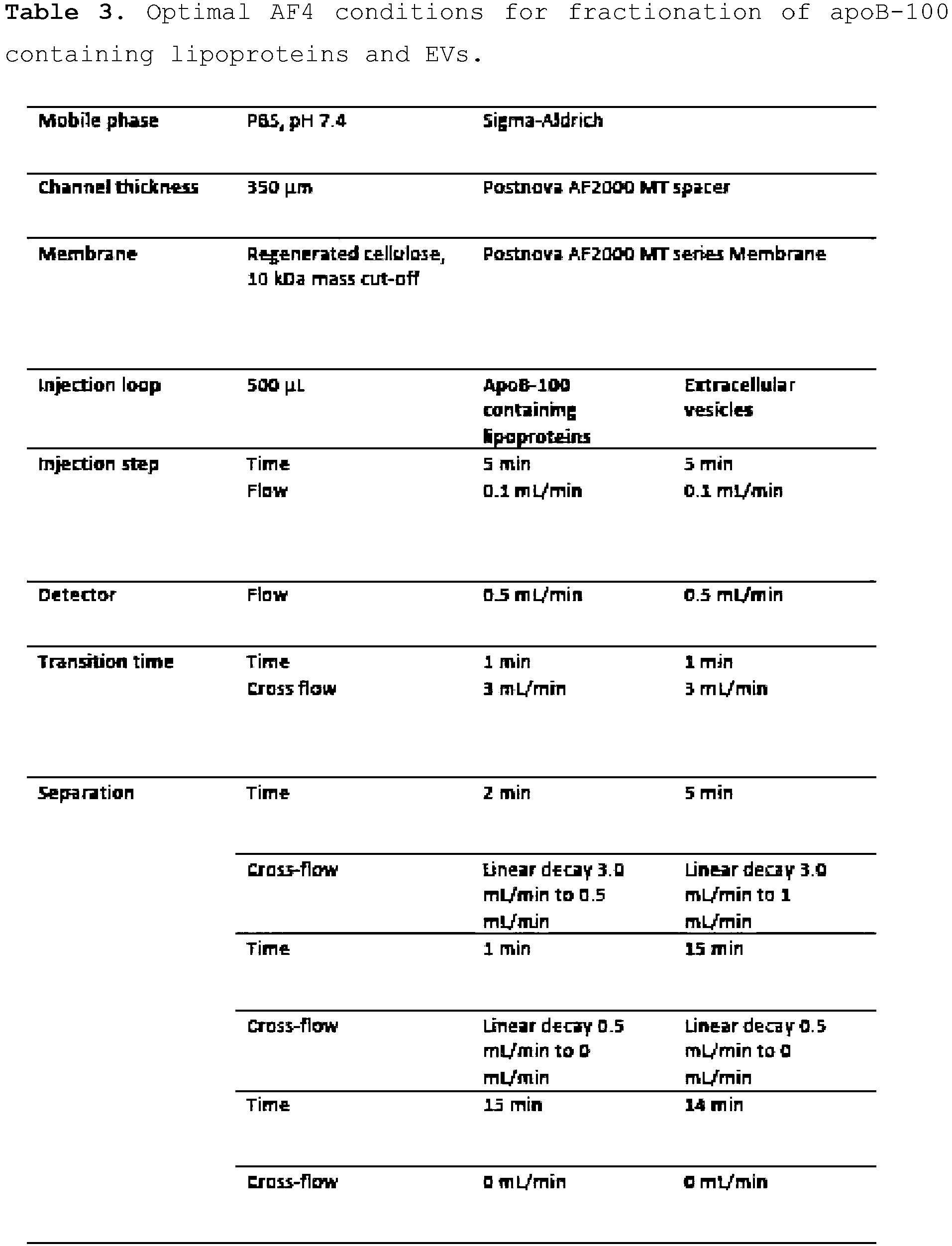

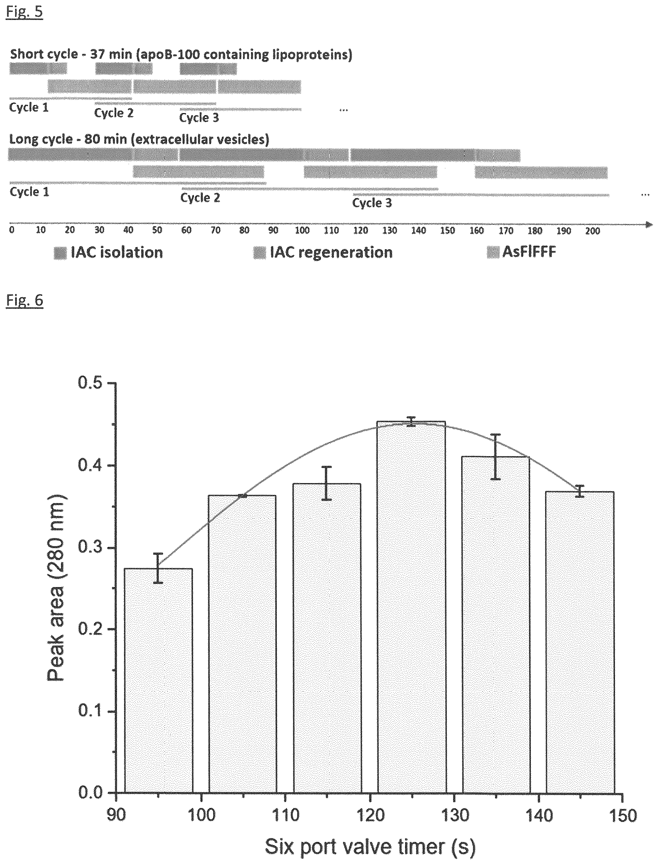

The inventors optimized the system's six port valve timer for sample transfer to AF4 from the IAC (anti apoB-100 monolithic disk column) with 1 mL of 100 ug/mL LDL samples (n=25, isolated by ultracentrifugation). The lipoproteins were eluted into the loop (500 µL) of the six port valve, and after the transfer, the AF4 run was activated with the signal of the timer. The time which yielded the highest sample concentrations (highest UV peak areas at 280 nm) was chosen (Figure 6) for all of the following experiments. The obtained UV peak areas revealed a repeatability of 0.3-6.6% for each of the selected valve times. Figure 5 shows the cycle times in repeated IAC-AF4 analysis cycles. A shorter cycle was employed for the isolation and fractionation of apoB-100 containing lipoproteins and a longer cycle for extracellular vesicles (including exosomes and exomeres).

The eluate from IAC was automatically injected to the AF4 system, after it had been fully transferred to the sample loop of the six port valve.

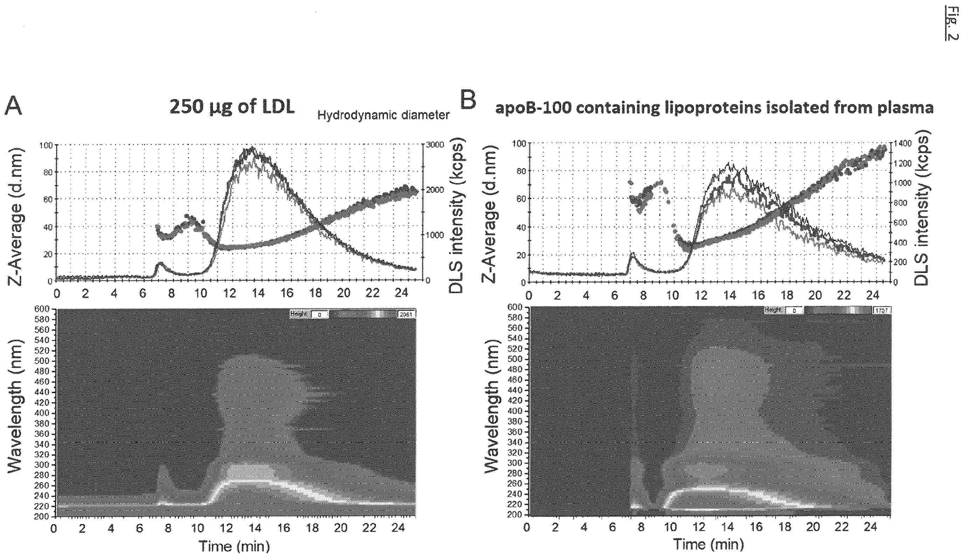

To allow for studying the recovery of the system, three 1 mL of 250 ug/mL LDL samples (isolated from human plasma by ultracentrifugation and diluted to the desired concentration with PBS) were captured and fractionated by IAC-AF4. The recovery was 99.6% based on DC protein assay and the samples contained 0.43±0.01 mg of cholesterol. In addition, raw flow DLS data displayed a good repeatability of the isolation and fractionation (Figure 2A). At the same time, the RSD of UV peak areas was 6.6%. The measured hydrodynamic diameter of the LDL particles at the retention time window of 10-15 min ranged from 24-28 nm and was in good agreement with the size range reported in literature. With the help of isoabsorbance plots of the DAD detector, we detected carotenoids (11-18 min) in the LDL core (430-500 nm). Most of the carotenoids were found at 12-15 min, that is the same time range where most of the LDLs were retained as well. The tail of the DLS peak (Figure 2A) with bigger size was hypothesized to correspond to fused LDL particles and LDL aggregates found in the sample.

(Figure 2 shows the IAC-AF4 analysis profiles obtained after fractionating the anti-apoB-100 monolithic disk isolates. Technical replicates (n=3) of the raw flow DLS data, hydrodynamic diameter (dots as Z-Average) on top, and the isoabsorbance plot of a selected run of pre-isolated LDLs (A) and apoB-100 containing lipoproteins isolated from human plasma (B) at the bottom.

The inventors also employed the system to study human plasma samples (1 mL, dilution factor 1:10 in PBS) to verify the applicability of the system, giving 0.84 % (n=3) for the RSD of UV peak areas. The DLS and DAD analysis profiles were similar to those of pure LDL. However, also bigger sized particles were detected (Figure 2B), since the isolation with anti apoB-100 monolithic disk was based on the recognition of epitope of the apoB-100. Chylomicrons, very-low-density lipoprotein (VLDL) particles, and their remnants (intermediate-density lipoprotein (IDL) particles) were also captured by the anti-apoB-100 disk confirmed by the hydrodynamic diameter of 95 nm obtained from DLS data. The results were in agreement with previous experiments of the inventors. The IAC was found to also trap small LDL particles of under 24 nm (retention time 11-12 min, Figure 2B). The on-line system could successfully capture all major lipoproteins, except HDL, which passed the monolithic column unretained by the IAC. The carotenoids were also present in the plasma isolates (at retention time 11-22 min), with the highest concentration at retention time of 13 min.

### Isolation and fractionation of CD9+ and CD61+ EV subpopulations by IAC - AF4

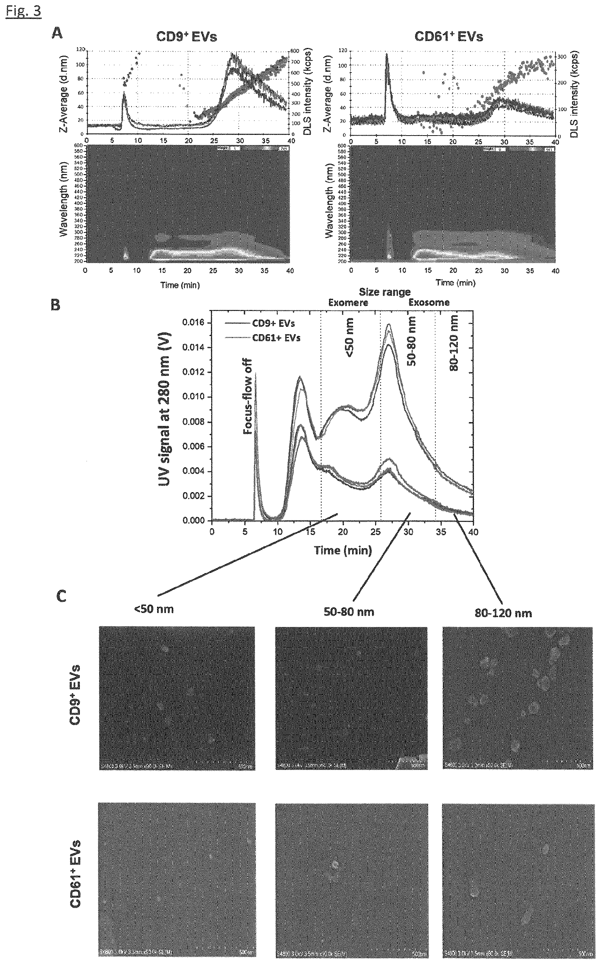

Furthermore, the system was employed to study subpopulations of EVs. CD61 antibody discovered application for isolation of platelet-derived EVs in the exosomal size range, and CD9 antibody for isolation of EVs both originating from multivesicular bodies (MVBs), as well as those CD9-positive EVs not originating from MVBs, but having a similar size range like exosomes. Subpopulations were selected and separated based on their size: <50 nm for size range of exomeres, 50-80 nm, and 80-120 nm for size range of exosomes. Due to the pore size of monolithic disk columns (1.3 um in diameter), EVs of a larger size than exosomes were excluded from being captured by the IAC (Figure 3A). Isoabsorbance plots showed no contamination caused by the lipoproteins in the isolates, since the DAD did not detect any carotenoids. The concentration of platelet-derived EVs in the exosomal size range was also significantly lower compared to CD9+ EVs (Figure 3B). The system was capable of successfully and reproducibly isolating and fractionating the EVs, and FESEM analysis of pooled fractions of the subpopulations (Figure 3C) was in good agreement with hydrodynamic diameters obtained by DLS.

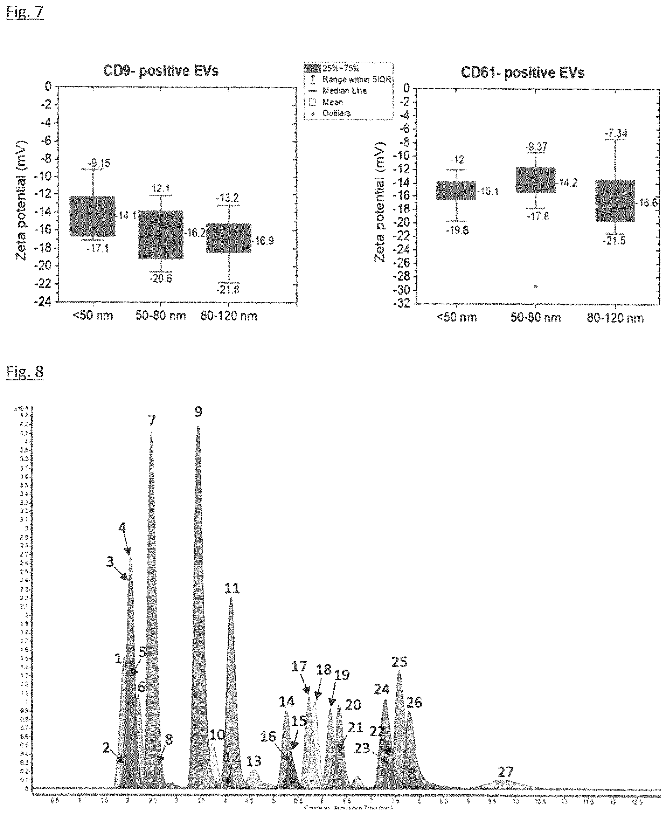

The RSD of UV peak areas of CD9+ EVs was found to be 2.9 % and 4.2 % for CD61+ EVs. The EVs in the size range of exomeres (<50 nm) were collected by combining fractions at retention times 16-26 min, 50-80 nm sized exosomes at 27-34 min, and 80-120 nm sized exosomes at 35-40 min. To the inventors' surprise, the exomere sized EVs were detected also in concentrations that were somewhat high, while they are reported to contain low levels of tetraspanin CD9 and integrins like CD61. However, the previously reported results on exomeres were performed on samples that were originating from cell lines and cell culture, whereas our IAC disks were used to enrich exomere sized CD9+ and CD61+ EVs from all possible cells that secrete exomeres to the plasma, thus capturing together all possible CD9+ and CD61+ exomere sized EVs. Even smaller sized particles than exomeres were found at retention time 10-15 min in both cases (Figure 3B). The mean surface charges (zeta potential) of the isolated exomere and exosome sized EVs were found to be negatively charged (Figure 7), which was in agreement with previously reported results in the literature. The CD9+ <50 nm EVs had a mean charge of -14.1 mV (n=9 independent measurements for each technical replicate n=3), -16.2 mV for 50-80 nm, and -16.9 mV for 80-120 nm subpopulations. While for the CD61+ <50 nm subpopulation the mean charge was -15.1 mV, -14.2 mV for 50-80 nm, and -16.6 mV for 80-120 nm subpopulations.

(Figure 3 shows IAC - AF4 analysis profiles after fractionating the CD9+ and CD61+ EV isolates. Technical replicates (n=3) of raw flow DLS data, hydrodynamic diameter (dots as Z-Average) on top, and isoabsorbance plot of selected run at the bottom (A). Overlaid UV spectra (280 nm) from the technical replicates (B) and FESEM morphology of fractionated subpopulations (C) for CD9+ and CD61+ EVs.)

Application of the IAC - AF4 system revealed a faster and more selective isolation and fractionation of lipoproteins (38 samples/24 h) and EVs (18 samples/24 h) compared to conventional standard methods, e.g. ultracentrifugation. The results demonstrated high repeatability, and minor sample loss and contamination. Although the IAC exploited a high pH for the successful elution of biomacromolecules, the eluting liquid in the on-line AF4 was immediately replaced with PBS, thus avoiding long exposure to high pH and a non-physiological environment. The IAC-AF4 system enabled cost efficiency and well-controlled final products that are especially needed in the EV-field. Additionally, it added to the productivity of personnel and instruments, and quality of the data, compared to previous protocols established for the isolation of the same biomacromolecules.

In plasma, amino acids are fundamentally involved in physiological activities, and their levels are relied on in clinical environments for diagnostic purposes. EVs have been found to carry amino acids and other small metabolites. Therefore, the study of free amino acids found in EVs helped to shed light on their distinct biological roles and properties. The inventors also developed an HILIC-MS/MS method for the analysis of free amino acids and glucose found inside CD9+ and CD61+ EV subpopulations. Chromatograms with linearity and limit of detection of the method, and effect of the sample matrix on the results are reported in Figures 3-10 and Tables 4-5.

Figure 8 shows extracted ion chromatograms (EICs) based on MRM of a standard mixture containing amino acids, glucose, and internal standards (ISTDs) (Gly-d2, Lys-d4, Phe-d2, and Fructose-13C6) listed in Table 3. The concentration was 1 ug/mL for all standards and amino acid ISTDs and 5 ug/mL for Fructose-13C6. The peaks were following: 1. Leu, 2. Ile, 3. Phe-d2, 4. Phe, 5. GABA, 6. Trp, 7. Val, 8. Met, 9. Pro, 10. Tyr, 11. Ala, 12. Fructose-13C6, 13. Glucose, 14. Thr, 15. Gly-d2, 16. Gly, 17. Gln, 18. Glu, 19. Cit, 20. Ser, 21. Asp, 22. Lys, 23. Lys-d4, 24. Arg, 25. His, 26. Orn, and 27. Asn.

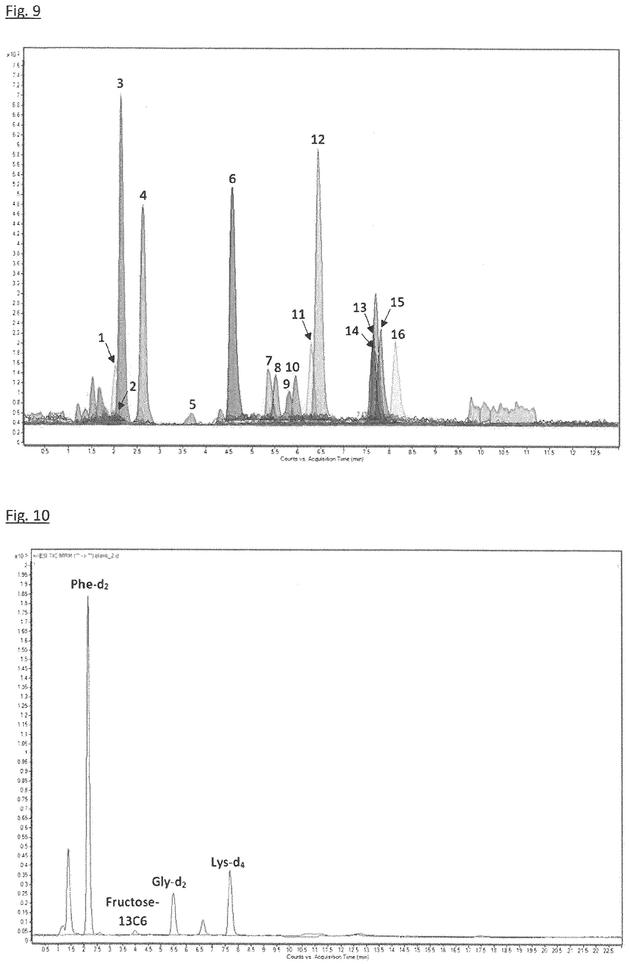

Figure 9 displays extracted ion chromatograms (EICs) based on MRM of a 50-80 nm CD61+ EV subpopulation. Peak identification: 1. Leu, 2. Ile, 3. Phe, 4. Val, 5. Pro, 6. Ala, 7. Thr, 8. Gly, 9. Gln, 10. Glu, 11. Cit, 12. Ser, 13. Arg, 14. Lys, 15. His, and 16. Orn.

Figure 10 displays total ion chromatograms (TICs) of blank containing mobile phase 1 and 2 (1:1 v/v) (red) and 50-80 nm CD61+ EV subpopulation with identified ISTDs (green).

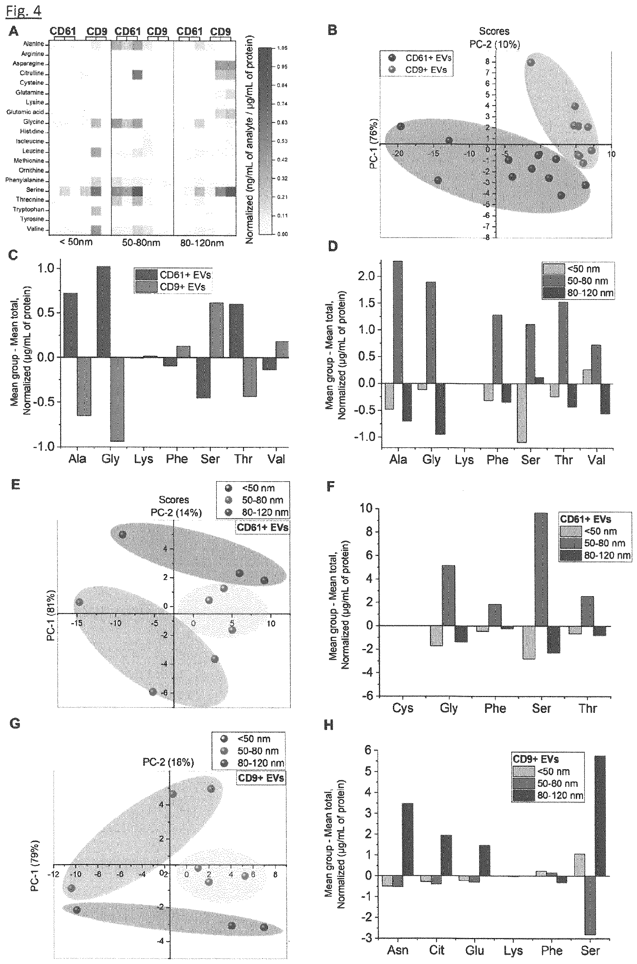

The inventors found that both CD9+ and CD61+ EVs shared similarities but also differences in terms of free amino acid concentrations. This is shown in Figure 4A. Among all free amino acids, Ser was found to be the most abundant. Ser is a non-essential amino acid, which is an important component in the synthesis of membrane lipids, including sphingolipids and phosphatidylserine. Both lipids are found to be enriched in exosomal membranes. It is thus likely that free Ser was accumulated inside the exosomes during exosome formation processes. In addition, CD61+ EV subpopulations of exosomal size range (50-80 nm) contained the highest concentrations of free amino acids, while for CD9+ EVs, the levels were the most prominent for the exosomal size range of 80-120 nm. The EVs <50 nm (size range of exomeres) were least abundant in Ser, which indicates their nonmembranous nature as described by Zhang et al. (Zhang, H.; Freitas, D.; Kim, H. S.; Fabijanic, K.; Li, Z.; Chen, H.; Mark, M. T.; Molina, H.; Martin, A. B.; Bojmar, L.; Fang, J.; Rampersaud, S.; Hoshino, A.; Matei, I.; Kenific, C. M.; Nakajima, M.; Mutvei, A. P.; Sansone, P.; Buehring, W.; Wang, H.; Jimenez, J. P.; Cohen-Gould, L.; Paknejad, N.; Brendel, M.; Manova-Todorova, K.; Magalhães, A.; Ferreira, J. A.; Osório, H.; Silva, A. M.; Massey, A.; Cubillos-Ruiz, J. R.; Galletti, G.; Giannakakou, P.; Cuervo, A. M.; Blenis, J.; Schwartz, R.; Brady, M. S.; Peinado, H.; Bromberg, J.; Matsui, H.; Reis, C. A.; Lyden, D. Identification of Distinct Nanoparticles and Subsets of Extracellular Vesicles by Asymmetric Flow Field-Flow Fractionation. Nat. Cell Biol. 2018, 20 (3), 332-343).

To have a further visual display and clarification of the differences between the two EV subpopulations, PCA and LDA analyses were used. The scoring plot obtained from PCA analysis (Figure 4B) indicated clear differences between CD9+ and CD61+ EVs. Based on the LDA results (Figure 4C), with over 93% of samples correctly classified, the differences between CD9+ and CD61+ EVs were significantly contributed by the following amino acids: Ala, Gly, Lys, Phe, Ser, Thr, and Val. With the levels of Ala, Gly, and Thr being significantly higher in CD61+ EVs compared to CD9+ EVs. Interestingly, Ala, Cys, Gly, Ser, and Thr are involved in the biochemical pathway of gluconeogenesis from amino acids and can be directly converted to pyruvate.

In addition, Ala and Gly are important in immune responses by inhibiting apoptosis. They also serve as anti-inflammatory and immunomodulatory agents. CD61+ EVs are originated from platelets, and these findings provide further credence to the role of platelets in defence mechanism and inflammation. Based on the Western blot analysis reported in our previous study, part of the CD61+ EVs also contained CD9, indicating that the differences from statistical analyses of CD61+ and CD9+ EVs were most likely caused by subpopulation sets (containing only CD61 or only CD9) that do not overlap. Moreover, based on subpopulations, irrespective of the EV origin, the 50-80 nm subpopulation (in the size range of small exosomes) contained the highest levels of Ala, Gly, Ser, and Thr (Figure 4D). This implies that EVs in the size range of small exosomes are more likely to take part in the gluconeogenesis compared to other subpopulations. The differences among EVs <50 nm for size range of exomeres, 50-80 nm, and 80-120 nm for size range of exosomes for both CD9+ and CD61+ EVs were the subject of further studies (Figures 4E-H). The PCA analysis proposed a clear distinction among the three subpopulations of different sizes (Figures 4E and G). The good classification of the samples by the LDA models (90 and 100 % of the samples correctly classified for CD9+ and CD61+ subpopulations, respectively) was in agreement with these results. In CD61+ subpopulations, Cys, Gly, Phe, Ser and Thr were contributing to the differences between the sizes. These free amino acids were most abundant in the 50-80 nm subpopulation, indicating that among CD61+ EVs of size range of small exosomes might participate in gluconeogenesis. On the other hand, CD9+ EV subpopulations were different due to other free amino acids. Asn, Cit, Glu, Lys, Phe, and Ser were contributing significantly in CD9+ EVs (Figures 4H). The levels of Asn, Cit, Glu, and Ser were highest in the 80-120 nm subpopulation of size range of large exosomes. Interestingly the levels of Ser were significantly higher in the 80-120 nm subpopulation compared to 50-80 nm subpopulation among CD9+ EVs. The differences also provided further evidence of distinct cellular origins of CD9+ and CD61+ EVs in the exosomal size range.

Figure 4 shows multivariate analysis of amino acids found in CD61+ and CD9+ EV subpopulations. Heat map visualization of amino acids corresponds to their normalized concentrations (ng/mL per pg/mL of total protein) (A). Scoring plot of PCA analysis showing differences between CD61+ and CD9+ EVs (B). Discriminant analysis of differences between amino acids found in CD61+ and CD9+ EVs (C). Discriminant analysis of differences between amino acids found between different sizes of combined EV subpopulations (D). Scoring plot of PCA analysis revealing differences between subpopulations of different sizes of CD61+ EVs (E). Discriminant analysis of differences between amino acids found between CD61+ EV subpopulations (F). Scoring plot of PCA analysis shows differences between subpopulations of different sizes of CD9+ EVs (G). Discriminant analysis of differences between amino acids found between CD9+ EV subpopulations (H).

Glucose levels of EVs were measured in addition to amino acids. It was found that all subpopulations of CD61+ EVs contained glucose in the concentration range of pmol/mL. The presence of glucose can possibly be linked to the CD61+ EV fractions having amino acids essential for gluconeogenesis. We only found glucose in 50-80 nm subpopulation in CD9+ EVs. Importantly, the results proved that different free amino acids and glucose concentrations were found in EV subpopulations isolated and fractionated by on-line IAC-AF4. These differences can be further used as key factors to differentiate the subpopulations of EVs (exomeres, small and large exosomes) from different cellular origin, and to confirm their distinct properties and functions in the human physiology. The functional activity of isolated and fractionated EVs still needs to be studied in detail. The results of this study demonstrated that on-line IAC-AF4 is an important tool for biomarker and composition studies.

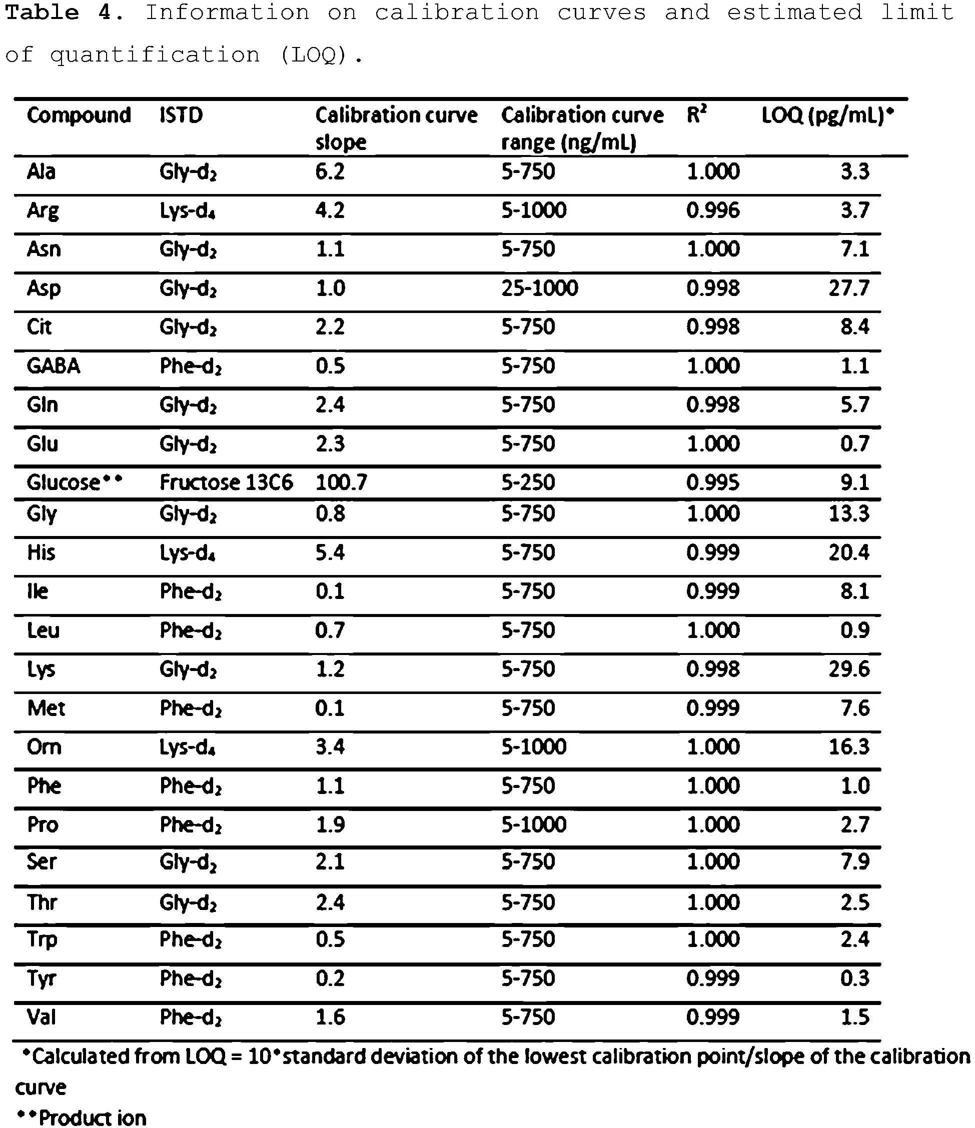

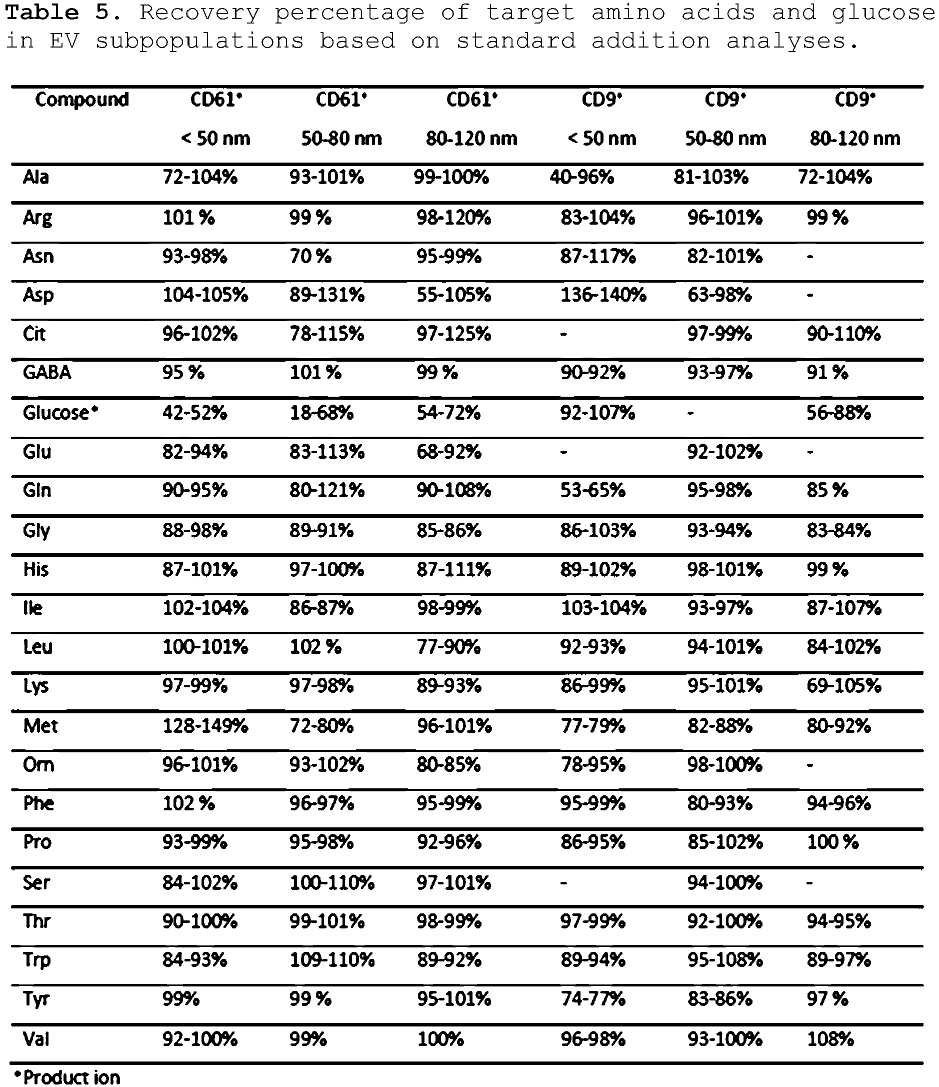

## Claims

1. Method of fractionating a heterogeneous sample, comprising:
- an immunoaffinity chromatography step of introducing a heterogeneous sample into an immunoaffinity chromatography device (24), the immunoaffinity chromatography device comprising a substrate arranged to selectively bind to a component of the heterogeneous sample,
- subsequent to the immunoaffinity chromatography step, an elution step of letting an eluent flow through the immunoaffinity chromatography device, the eluent being arranged to disrupt the bond between the bound component of the heterogeneous sample and the substrate to thus elute the component,
**characterized by**
- subsequent to the elution step, a field flow fractionation step of performing field flow fractionation using a field flow fractionating device (32) on the eluent flowing out of the immunoaffinity chromatography device (24) and being directed to the field flow fractionating device (32) using a conduit (30).

2. Method according to claim 1, further comprising a rinsing step of flowing a cleaning fluid through immunoaffinity chromatography device, the rinsing step occurring between the immunoaffinity chromatography step and the elution step.

3. Method according to claim 1 or 2, wherein the field flow fractionation step comprises an asymmetrical flow field flow fractionation step.

4. Method according to one of the preceding claims, wherein the field flow fractionation step comprises another flow field flow fractionation subtechnique, preferably frit-inlet asymmetrical flow field flow fractionation or electrical asymmetrical flow field flow fractionation.

5. Method according to one of the preceding claims, wherein the field flow fraction step comprises a centrifugal field flow fractionation step.

6. Method according to one of the preceding claims, wherein the field flow fraction step comprises a thermal field flow fractionation step.

7. Method according to one of the preceding claims, further comprising delivering the fractionated fluid that is output from the field flow fractionation step to a storage container (46).

8. Method according to one of the preceding claims, further comprising analysing the fractionated fluid that is output from the field flow fractionation step using one or more of an UV detector, a multi-angle light scattering detector, a diode array detector, and a dynamic light scattering detector (44).

9. Method according to one of the preceding claims, the heterogeneous sample being a human or animal blood, urine or blood component, preferably human or animal blood plasma or serum.

10. Method according to one of the preceding claims, the substrate being arranged to selectively bind two or more components of the heterogeneous sample, wherein the eluent is arranged to disrupt the bond of only some of the bound components.

11. Apparatus comprising a sample vessel (18), a pump (12) for pumping the sample out of the sample vessel (18), an immunoaffinity chromatography device (24), a field flow fractionating device (32) being connected to the immunoaffinity chromatography device (24) by a conduit (30) and a device for introducing en eluent into the immunoaffinity chromatography device (24), said apparatus being arranged for carrying out the method according to one of the preceding claims.

## Patentansprüche

1. Verfahren zur Fraktionierung einer heterogenen Probe, umfassend:
- einen Immunaffinitätschromatographieschritt des Einführens einer heterogenen Probe in eine Immunaffinitätschromatographievorrichtung (24), wobei die Immunaffinitätschromatographievorrichtung ein Substrat umfasst, das so angeordnet ist, dass es selektiv an eine Komponente der heterogenen Probe bindet,
- nach dem Immunaffinitätschromatographieschritt einen Elutionsschritt, bei dem ein Elutionsmittel durch die Immunaffinitätschromatographievorrichtung fließen gelassen wird, wobei das Elutionsmittel so angeordnet ist, dass es die Bindung zwischen der gebundenen Komponente der heterogenen Probe und dem Substrat aufbricht, um so die Komponente zu eluieren,
**gekennzeichnet durch**
- nach dem Elutionsschritt einen Feldflussfraktionierungsschritt der Durchführung einer Feldflussfraktionierung unter Verwendung einer Feldflussfraktionierungsvorrichtung (32) an dem Elutionsmittel, das aus der Immunaffinitätschromatographievorrichtung (24) fließt und unter Verwendung einer Leitung (30) zu der Feldflussfraktionierungsvorrichtung (32) geleitet wird.

2. Verfahren nach Anspruch 1, weiter umfassend einen Spülschritt, bei dem eine Reinigungsflüssigkeit durch die Immunaffinitätschromatographievorrichtung fließt, wobei der Spülschritt zwischen dem Immunoaffinitätschromatographieschritt und dem Elutionsschritt stattfindet.

3. Verfahren nach Anspruch 1 oder 2, wobei der Feldflussfraktionierungsschritt einen asymmetrischen Feldflussfraktionierungsschritt umfasst.

4. Verfahren nach einem der vorstehenden Ansprüche, wobei der Feldflussfraktionierungsschritt eine andere Teiltechnik der Flussfeldflussfraktionierung umfasst, vorzugsweise die asymmetrische Flussfeldflussfraktionierung mit Fritteneinlass oder die elektrische asymmetrische Flussfeldflussfraktionierung.

5. Verfahren nach einem der vorstehenden Ansprüche, wobei der Feldflussfraktionierungsschritt einen zentrifugalen Feldflussfraktionierungsschritt umfasst.

6. Verfahren nach einem der vorstehenden Ansprüche, wobei der Feldflussfraktionierungsschritt einen thermischen Feldflussfraktionierungsschritt umfasst.

7. Verfahren nach einem der vorstehenden Ansprüche, weiter umfassend das Zuführen des fraktionierten Fluids, das aus dem Feldflussfraktionierungsschritt ausgegeben wird, zu einem Speicherbehälter (46).

8. Verfahren nach einem der vorstehenden Ansprüche, weiter umfassend Analysieren des fraktionierten Fluids, das aus dem Feldflussfraktionierungsschritt ausgegeben wird, unter Verwendung eines oder mehrerer von einem UV-Detektor, einem Mehrwinkel-Lichtstreudetektor, einem Diodenarraydetektor und einem dynamischen Lichtstreudetektor (44).

9. Verfahren nach einem der vorstehenden Ansprüche, wobei die heterogene Probe menschliches oder tierisches Blut, Urin oder eine Blutkomponente ist, vorzugsweise menschliches oder tierisches Blutplasma oder Serum.

10. Verfahren nach einem der vorstehenden Ansprüche, wobei das Substrat so angeordnet ist, dass es zwei oder mehr Komponenten der heterogenen Probe selektiv bindet, wobei das Elutionsmittel so angeordnet ist, das es die Bindung nur einiger gebundener Komponenten aufbricht.

11. Vorrichtung umfassend
ein Probengefäß (18), eine Pumpe (12) zum Abpumpen der Probe aus dem Probengefäß (18), eine Immunaffinitätschromatographievorrichtung (24), eine Feldflussfraktionierungsvorrichtung (32), die über eine Leitung (30) mit der Immunaffinitätschromatographievorrichtung (24) verbunden ist, und eine Vorrichtung zum Einleiten eines Elutionsmittels in die Immunaffinitätschromatographievorrichtung (24), wobei die Vorrichtung zur Durchführung des Verfahrens nach einem der vorhergehenden Ansprüche eingerichtet ist.

## Revendications

1. Procédé de fractionnement d'un échantillon hétérogène, comprenant :
- une étape de chromatographie par immunoaffinité consistant à introduire un échantillon hétérogène dans un dispositif (24) de chromatographie par immunoaffinité, le dispositif de chromatographie par immunoaffinité comprenant un substrat conçu pour se lier sélectivement à un composant de l'échantillon hétérogène,
- suite à l'étape de chromatographie par immunoaffinité, une étape d'élution consistant à laisser un éluant s'écouler à travers le dispositif de chromatographie par immunoaffinité, l'éluant étant conçu pour perturber la liaison entre le composant lié de l'échantillon hétérogène et le substrat pour ainsi éluer le composant,
**caractérisé par**
- suite à l'étape d'élution, une étape de fractionnement flux-force consistant à mettre en oeuvre un fractionnement flux-force à l'aide d'un dispositif (32) de fractionnement flux-force sur l'éluant s'écoulant en dehors du dispositif (24) de chromatographie par immunoaffinité et étant dirigé vers le dispositif (32) de fractionnement flux-force à l'aide d'un conduit (30).

2. Procédé selon la revendication 1, comprenant en outre une étape de rinçage consistant à faire s'écouler un fluide de nettoyage à travers le dispositif de chromatographie par immunoaffinité, l'étape de rinçage se produisant entre l'étape de chromatographie par immunoaffinité et l'étape d'élution.

3. Procédé selon la revendication 1 ou la revendication 2, dans lequel l'étape de fractionnement flux-force comprend une étape de fractionnement flux-force à flux asymétrique.

4. Procédé selon l'une des revendications précédentes, dans lequel l'étape de fractionnement flux-force comprend une sous-technique de fractionnement flux-force à autre flux, de préférence un fractionnement flux-force à flux asymétrique à entrée de fritte ou un fractionnement flux-force à flux asymétrique électrique.

5. Procédé selon l'une des revendications précédentes, dans lequel l'étape de fractionnement flux-force comprend une 'étape de fractionnement flux-force centrifuge.

6. Procédé selon l'une des revendications précédentes, dans lequel l'étape de fractionnement flux-force comprend une 'étape de fractionnement flux-force thermique.

7. Procédé selon l'une des revendications précédentes, comprenant en outre la distribution du fluide fractionné qui est délivré en sortie depuis l'étape de fractionnement flux-force jusqu'à un récipient de stockage (46).

8. Procédé selon l'une des revendications précédentes, comprenant en outre l'analyse du fluide fractionné qui est délivré en sortie depuis l'étape de fractionnement flux-force à l'aide d'un ou plusieurs parmi un détecteur d'UV, un détecteur de diffusion de lumière à angles multiples, un détecteur à réseau de diodes et un détecteur de diffusion de lumière dynamique (44).

9. Procédé selon l'une des revendications précédentes, l'échantillon hétérogène étant un sang humain ou animal, un composant d'urine ou de sang, de préférence du sérum ou plasma sanguin humain ou animal.

10. Procédé selon l'une des revendications précédentes, le substrat étant conçu pour lier sélectivement deux composants ou plus de l'échantillon hétérogène, dans lequel l'éluant est conçu pour perturber la liaison de seulement certains des composants liés.

11. Appareil comprenant une cuve (18) à échantillon, une pompe (12) pour pomper l'échantillon hors de la cuve (18) à échantillon, un dispositif (24) de chromatographie par immunoaffinité, un dispositif (32) de fractionnement flux-force relié au dispositif (24) de chromatographie par immunoaffinité par un conduit (30) et un dispositif pour introduire un éluant dans le dispositif (24) de chromatographie par immunoaffinité, ledit appareil étant conçu pour effectuer le procédé selon l'une des revendications précédentes.
